# EUROPEAN PATENT APPLICATION

(11) **EP 3 590 822 A1**
(43) Date of publication of application: **08.01.2020**
(21) Application number: 18761633.9
(22) Date of filing: 02.02.2018
(51) Int. Cl.: B63H 21/20, B63H 21/17, B63H 21/21, B63H 23/30

(54) **MARINE PROPULSION SYSTEM AND SHIP**

(30) Priority: 28.02.2017 JP 2017036478
(71) Applicant: Kawasaki Jukogyo Kabushiki Kaisha, Kobe-shi, Hyogo 650-8670 (JP)
(72) Inventor: OHNO, Tatsuya, Hyogo 650-8670 (JP); ONODERA, Tatsuya, Hyogo 650-8670 (JP)
(74) Representative: Luten, Martin Haaije
(86) International application number: PCT/JP2018/003560
(87) International publication number: WO 2018/159208

(57) **Abstract**

A ship propulsion system includes: a thrust command unit operated between a neutral state and a thrust-generating state; a main engine that drives a thruster; a clutch interposed between the thruster and the main engine, the clutch being switched between an engaged state and a disengaged state; an electric motor that drives the thruster; and a controller that controls the main engine, the clutch, and the electric motor. After the thrust command unit is operated from the thrust-generating state into the neutral state, the controller switches the clutch into the disengaged state and stops the main engine, and thereafter, when the thrust command unit is operated from the neutral state into the thrust-generating state, the controller starts the electric motor to drive the thruster.

## Description

### Technical Field

The present invention relates to a ship propulsion system that drives a thruster by a main engine and an electric motor, and to a ship including the ship propulsion system.

### Background Art

Conventionally, there is a known ship propulsion system called hybrid propulsion system that switches the means of driving a thruster between a main engine and an electric motor for the purpose of reducing the fuel consumption of the main engine (see Patent Literature 1, for example).

### Citation List

### Patent Literature

PTL 1: Japanese Laid-Open Patent Application Publication No. 2012-25250

### Summary of Invention

### Technical Problem

Generally speaking, depending on the type of a ship, a stand-by time for the ship on the water is long (e.g., in the case of a patrol ship or a tugboat). Also for these kinds of ships, the fuel consumption of their main engine can be reduced by adopting a hybrid propulsion system. However, it is desired to further reduce the fuel consumption of the main engine of these kinds of ships.

In view of the above, an object of the present invention is to provide a ship propulsion system that makes it possible to efficiently reduce the fuel consumption of the main engine of a ship whose stand-by time on the water is long, and to provide a ship including the ship propulsion system.

### Solution to Problem

In order to solve the above-described problems, a ship propulsion system according to the present invention includes: a thrust command unit operated between a neutral state and a thrust-generating state; a main engine that drives a thruster; a clutch interposed between the thruster and the main engine, the clutch being switched between an engaged state and a disengaged state; an electric motor that drives the thruster; and a controller that controls the main engine, the clutch, and the electric motor. After the thrust command unit is operated from the thrust-generating state into the neutral state, the controller switches the clutch into the disengaged state and stops the main engine, and thereafter, when the thrust command unit is operated from the neutral state into the thrust-generating state, the controller starts the electric motor to drive the thruster.

According to the above configuration, while the thrust command unit is kept in the neutral state, the main engine is stopped. This makes it possible to efficiently reduce the fuel consumption of the main engine. On the other hand, when the thrust command unit is operated from the neutral state into the thrust-generating state, the electric motor is started, and thereby the thruster can be driven immediately. Fast response of the ship can be guaranteed in this manner, instead of driving the thruster by the main engine. Therefore, stopping the main engine causes no operational concern.

After starting the electric motor, when a required output that is determined based on an operating amount of the thrust command unit exceeds a threshold, the controller may start the main engine and switch the clutch into the engaged state. According to this configuration, the thruster can be driven by the main engine when large thrust is required.

The electric motor may be used as a power generator when the main engine drives the thruster. According to this configuration, while the main engine is in operation, electric power can be generated by the electric motor.

The above ship propulsion system may further include an electrical storage device that stores electric power generated by the electric motor. According to this configuration, the electric motor can be started by utilizing the electric power generated by the electric motor. This makes it possible to eliminate the necessity to supply electric power from an onboard power source to the electric motor.

For example, a rated output of the electric motor may be 10% or less of a rated output of the main engine.

A ship according to the present invention includes the above-described ship propulsion system.

### Advantageous Effects of Invention

The present invention makes it possible to efficiently reduce the fuel consumption of the main engine of a ship whose stand-by time on the water is long.

### Brief Description of Drawings

Fig. 1 shows a schematic configuration of a ship propulsion system according to one embodiment of the present invention.
Fig. 2 shows a schematic configuration of a propulsion mechanism according to a variation.
Fig. 3 shows a schematic configuration of the propulsion mechanism according to another variation.

### Description of Embodiments

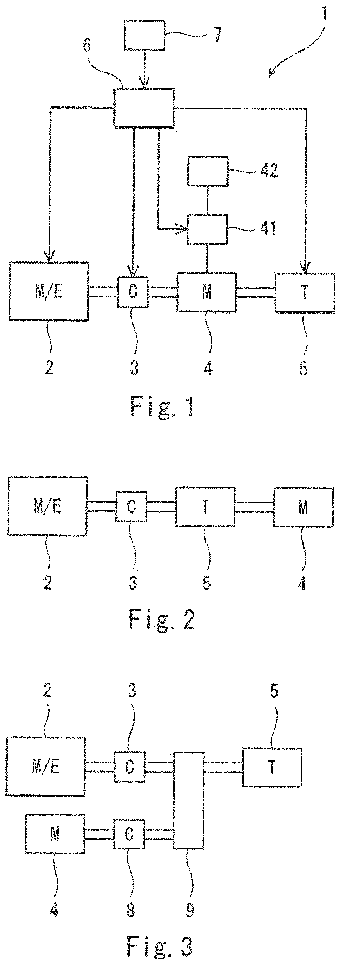

Fig. 1 shows a ship propulsion system 1 according to one embodiment of the present invention. The ship propulsion system 1 is installed in a ship. The ship propulsion system 1 includes a thruster 5, a main engine 2, and an electric motor 4. The main engine 2 and the electric motor 4 drive the thruster 5.

In the present embodiment, the main engine 2, the electric motor 4, and the thruster 5 are connected in series in this order. An electric clutch 3 is interposed between the main engine 2 and the electric motor 4. The propulsion mechanism from the main engine 2 to the thruster 5 is provided in the ship, such that the number of such propulsion mechanisms provided in the ship depends on the type of the ship, i.e., one or a plurality of the propulsion mechanisms may be provided in the ship depending on the type of the ship.

The main engine 2 combusts a fuel to rotate an output shaft. The main engine 2 may be a reciprocating engine, or may be a gas turbine engine. The fuel may be a fuel oil, or may be a fuel gas.

The clutch 3 is switched between an engaged state and a disengaged state. When the clutch 3 is in the engaged state, torque transmission is enabled between the main engine 2 and the electric motor 4. When the clutch 3 is in the disengaged state, torque transmission between the main engine 2 and the electric motor 4 is disabled.

The electric motor 4 is connected to an inverter 41. In the present embodiment, the electric motor 4 is used as a power generator when the main engine 2 drives the thruster 5. Therefore, an electrical storage device 42, which stores electric power generated by the electric motor 4, is connected to the inverter 41.

It should be noted that another power generator different from the electric motor 4 may also be installed in the ship, and electric power generated by this other power generator may be stored in the electrical storage device 42. The other power generator different from the electric motor 4 may be driven by a diesel engine, for example. However, even if the other power generator different from the electric motor 4 is absent, all the electric power required for use in the ship can be covered by the electric power generated by the electric motor 4.

In the present embodiment, the thruster 5 is an azimuth thruster with a variable propeller shaft direction. The azimuth thruster incorporates therein a gear reducer and a turning mechanism. Alternatively, the thruster 5 may be of a line shaft type (CPP or FPP) with a fixed propeller shaft direction. In this case, a gear reducer is provided between the electric motor 4 and the thruster 5.

The main engine 2, the clutch 3, and the thruster 5 are controlled by a controller 6. The controller 6 also controls the electric motor 4 via the inverter 41. For example, the controller 6 is a computer including a CPU and memories such as a ROM and a RAM. The CPU executes a program stored in the ROM. The controller 6 may be a single device, or may be divided up into a plurality of devices.

The controller 6 is electrically connected to a thrust command unit 7. The thrust command unit 7 is operated by a ship operator for adjusting the thrust of the thruster 5. The thrust command unit 7 is operated between a neutral state and a thrust-generating state. When the thrust command unit 7 is in the neutral state, the thrust of the thruster 5 is zero. When the thrust command unit 7 is in the thrust-generating state, the thruster 5 is caused to generate forward thrust, rearward thrust, or turning thrust. For example, the thrust command unit 7 may be configured as a navigation speed lever and a steering device, or may be configured as a plurality of push buttons.

In the present embodiment, the electric motor 4 works mainly during a relatively short period of time after the thrust command unit 7 is operated from the neutral state into the thrust-generating state. In view of this, the rated output of the electric motor 4 is desirably 10% or less of the rated output of the main engine 2.

While the thrust command unit 7 is being operated in the thrust-generating state, normally, the controller 6 causes the main engine 2 to work, thereby driving the thruster 5 by the main engine 2. After the thrust command unit 7 is operated from the thrust-generating state into the neutral state, the controller 6 shifts to idling stop control when a predetermined condition is satisfied. For example, the predetermined condition is the elapse of a predetermined time after the thrust command unit 7 is brought back into the neutral state. In this case, the main engine 2 remains idle until the predetermined time elapses.

It should be noted that the controller 6 may be provided with a switch by which to select whether or not to permit the idling stop control. That is, the controller 6 may shift to the idling stop control only when a ship operator permits the idling stop control. In this case, unless the ship operator permits the idling stop control, the main engine 2 always remains idle while the thrust command unit 7 is kept in the neutral state.

Alternatively, the controller 6 may be provided with a button by which to forcibly shift to the idling stop control. That is, even while the thrust command unit 7 is being operated in the thrust-generating state, the controller 6 may shift to the idling stop control when the ship operator pushes the button.

When having shifted to the idling stop control, the controller 6 switches the clutch 3 into the disengaged state, and stops the main engine 2. The switching of the clutch 3 into the disengaged state and the stopping of the main engine 2 are not necessarily performed concurrently. One of the switching of the clutch 3 into the disengaged state and the stopping of the main engine 2 may be performed first, and the other may be performed thereafter.

Subsequently, when the thrust command unit 7 is operated from the neutral state into the thrust-generating state, the controller 6 starts the electric motor 4 to drive the thruster 5. If a required output that is determined based on an operating amount of the thrust command unit 7 is small, the thruster 5 may be driven only by the electric motor 4. However, if the required output is large, it is desirable to switch the means of driving the thruster 5 from the electric motor 4 to the main engine 2.

In view of the above, after starting the electric motor 4, when the required output, which is determined based on the operating amount of the thrust command unit 7, exceeds a threshold, the controller 6 starts the main engine 2 and switches the clutch 3 into the engaged state. It should be noted that the timing of switching the clutch 3 into the engaged state is desirably after the main engine 2 is started and when the rotational speed of the main engine 2 is brought close to the rotational speed of the electric motor 4. After the clutch 3 is switched into the engaged state, the controller 6 controls the inverter 41 to stop supplying electric power to the electric motor 4.

As described above, in the ship propulsion system 1 of the present embodiment, while the thrust command unit 7 is kept in the neutral state, the main engine 2 is stopped. This makes it possible to efficiently reduce the fuel consumption of the main engine 2. On the other hand, when the thrust command unit 7 is operated from the neutral state into the thrust-generating state, the electric motor 4 is started, and thereby the thruster 5 can be driven immediately. Fast response of the ship can be guaranteed in this manner, instead of driving the thruster 5 by the main engine 2. Therefore, stopping the main engine 2 causes no operational concern.

Further, in the present embodiment, after the electric motor 4 is started, the main engine 2 is started when the required output exceeds the threshold. Thus, the thruster 5 can be driven by the main engine 2 when large thrust is required.

Still further, in the present embodiment, when the main engine 2 drives the thruster 5, the electric motor 4 is used as a power generator. Thus, while the main engine 2 is in operation, electric power can be generated by the electric motor 4.

Still further, since the present embodiment includes the electrical storage device 42, the electric motor 4 can be started by utilizing the electric power generated by the electric motor 4. This makes it possible to eliminate the necessity to supply electric power from an onboard power source to the electric motor 4.

### (Variations)

The present invention is not limited to the above-described embodiment. Various modifications can be made without departing from the spirit of the present invention.

For example, the electrical storage device 42 is not essential. When starting the electric motor 4, electric power may be supplied to the electric motor 4 from a power generator that is driven by a diesel engine and that is intended for covering the supply of electric power required for use in the ship.

As shown in Fig. 2, the position of the electric motor 4 and the position of the thruster 5 may be switched with each other. In this case, another electric clutch (not shown) may be interposed between the main engine 2 and the electric motor 4, and while the main engine 2 is driving the thruster 5, this other clutch may be switched into the disengaged state.

Alternatively, as shown in Fig. 3, the main engine 2 and the electric motor 4 may be connected in parallel via a gearbox 9. In the example shown in Fig. 3, an electric clutch 8 is interposed between the electric motor 4 and the gearbox 9. However, the clutch 8 may be eliminated.

### Reference Signs List

1 ship propulsion system
2 main engine
3, 8 clutch
4 electric motor
42 electrical storage device
5 thruster
6 controller
7 thrust command unit

## Claims

1. A ship propulsion system comprising:
a thrust command unit operated between a neutral state and a thrust-generating state;
a main engine that drives a thruster;
a clutch interposed between the thruster and the main engine, the clutch being switched between an engaged state and a disengaged state;
an electric motor that drives the thruster; and
a controller that controls the main engine, the clutch, and the electric motor, wherein
after the thrust command unit is operated from the thrust-generating state into the neutral state, the controller switches the clutch into the disengaged state and stops the main engine, and thereafter, when the thrust command unit is operated from the neutral state into the thrust-generating state, the controller starts the electric motor to drive the thruster.

2. The ship propulsion system according to claim 1, wherein
after starting the electric motor, when a required output that is determined based on an operating amount of the thrust command unit exceeds a threshold, the controller starts the main engine and switches the clutch into the engaged state.

3. The ship propulsion system according to claim 1 or 2, wherein
the electric motor is used as a power generator when the main engine drives the thruster.

4. The ship propulsion system according to claim 3, further comprising an electrical storage device that stores electric power generated by the electric motor.

5. The ship propulsion system according to any one of claims 1 to 4, wherein
a rated output of the electric motor is 10% or less of a rated output of the main engine.

6. A ship comprising the ship propulsion system according to any one of claims 1 to 5.
